# EUROPEAN PATENT APPLICATION

(11) **EP 4 387 044 A1**
(43) Date of publication of application: **19.06.2024**
(21) Application number: 22856014.0
(22) Date of filing: 05.07.2022
(51) Int. Cl.: H02J 9/00, H02J 9/06, H01H 13/14, H02J 7/34, H04B 1/16, H02J 7/14

(54) **STANDBY POWER CUT-OFF DEVICE**

(30) Priority: 09.08.2021 KR 20210104254; 05.10.2021 KR 20210131324
(71) Applicant: Kim, Byongho, Busan 49115 (KR)
(72) Inventor: Kim, Byongho, Busan 49115 (KR)
(74) Representative: González López-Menchero, Álvaro Luis
(86) International application number: PCT/KR2022/009645
(87) International publication number: WO 2023/018012

(57) **Abstract**

The present disclosure relates to a standby power cut-off device provided on a power line connected from a commercial alternating current (AC) power source to an inside of an electrical apparatus, the device including: a manual switch that supplies or cuts off power from the commercial AC power source; a non-contact relay that supplies the commercial AC power to an output side when a current flows to an input side according to the operation of the manual switch; a low-power supply unit that converts and supplies a voltage of the commercial AC power supplied by the non-contact relay; a microprocessor that receives power supplied by the low-power supply unit and controls the operation of the standby power cut-off device; a control signal generator that sends a control signal to the microprocessor when a current flows according to the operation of the manual switch; a capacitor that is charged and then discharged according to the operation of the manual switch; and a resistor that causes a charging voltage of the capacitor to be greater than an operating voltage of the control signal generator, wherein when the manual switch operates, that is, when turning on or off the electrical apparatus, a current flows uninterruptedly in the control signal generator due to a discharge of the capacitor so as to prevent a malfunction due to the multiple operation control of the microprocessor.

## Description

### TECHNICAL FIELD

The present disclosure relates to a standby power cutoff device provided inside or outside an electrical apparatus to turn on/off the electrical apparatus by means of a manual switch while commercial alternating current (AC) power input to the electrical apparatus is cut off, in which when turned off, the commercial AC power source is cut off, and also power stored in an energy storage device becomes network standby power required for an Internet of Things (IoT) apparatus.

### BACKGROUND ART

In a standby state of an electrical apparatus, standby power becomes a big problem, and network standby power for an IoT apparatus becomes an even bigger problem. In addition, a power factor of standby power in the standby state of the electrical apparatus is very low, and thus there is a global demand for a solution to the problem of energy waste in a network standby mode.

Meanwhile, Korean Patent Registration No. 10-1494822 discloses a structure when a power switch is pressed, in the case of a forward direction, a photo triac and a photo coupler are turned on, AC power is supplied to a power supply unit, and the power supply unit supplies power to a control unit (microprocessor), so that the control unit operates a relay to continuously supply power to the power supply unit and the control unit. It has a structure in which once the control unit continues to receive power, an electronic product operates normally without pressing a power switch. However, while pressing the power switch, the photo coupler repeats the flow of current on and off, and when a user presses the switch for 1 second at a frequency of 60Hz, the flow of a current repeats on and off 60 times, and thus there is a risk of malfunction in which the control unit (microprocessor) detects multiple control signals to control multiple operations, that is, to control operations at least twice.

Meanwhile, in this specification, apparatuses to which a standby power cut-off device can be applied, such as wirelessly controlled electronic apparatuses such as Internet of Things electronic apparatuses or electronic apparatuses controlled with a remote control, electronic apparatuses other than the wirelessly controlled electronic apparatuses, and various electrical apparatuses, are collectively referred to as electrical apparatuses.

### DISCLOSURE OF INVENTION

### TECHNICAL PROBLEM

An aspect of the present disclosure is to provide a standby power cut-off device provided inside or outside an electrical apparatus to turn on/off safely without the risk of multiple operations by means of a manual switch while a commercial AC power source is cut off, in which when turned off, the commercial AC power source is cut off, and also an energy storage device is charged without unnecessary energy waste by means of a non-contact relay without using a main power switch through periodic charging of the energy storage device such as a super capacitor for network power in an Internet of Things apparatus, thereby allowing communication with minimal power.

### TECHNICAL SOLUTION

In order to solve the foregoing problems, there is provided a standby power cut-off device provided on a power line connected from a commercial alternating current (AC) power source to an inside of an electrical apparatus, the device including: a manual switch that supplies or cuts off power from the commercial AC power source; a non-contact relay that supplies the commercial AC power to an output side when a current flows to an input side according to the operation of the manual switch; a low-power supply unit that converts and supplies a voltage of the commercial AC power supplied by the non-contact relay; a microprocessor that receives power supplied by the low-power supply unit and controls the operation of the standby power cut-off device; a control signal generator that sends a control signal to the microprocessor when a current flows according to the operation of the manual switch; a capacitor that is charged and then discharged according to the operation of the manual switch; and a resistor that causes a charging voltage of the capacitor to be greater than an operating voltage of the control signal generator, wherein even though not in a forward direction when the manual switch operates, a current flows uninterruptedly in the control signal generator due to a discharge of the capacitor so as to prevent a malfunction due to the multiple operation control of the microprocessor.

### ADVANTAGEOUS EFFECTS

The present disclosure is provided inside or outside of an electrical apparatus, and thus there is no risk of multiple operations by means of a manual switch while a commercial AC power source is cut off to safely turns on the electrical apparatus without significant heat or sparks and cut off the commercial AC power source when turning off the electrical apparatus, thereby preventing electrical energy from being wasted due to standby power.

In addition, according to the present disclosure, the power required for the network of IoT devices is charged with a minimum amount of electrical energy using a storage device such as a super capacitor, and the commercial AC power is cut off at other times, thereby preventing the waste of electrical energy generated not only by active power but also by reactive power in a standby state.

### BRIEF DESCRIPTION OF THE DRAWINGS

FIG. 1 is a circuit diagram of a standby power cut-off device according to a first embodiment.
FIG. 2 is a circuit diagram showing a current flow of a standby power cut-off device according to a second embodiment.
FIG. 3 is a flowchart of controlling the on/off of an electrical apparatus such as an IoT device.

### BEST MODE FOR CARRYING OUT THE INVENTION

A standby power cut-off device provided on a power line connected from a commercial alternating current (AC) power source to an inside of an electrical apparatus, the device including: a manual switch that supplies or cuts off power from the commercial AC power source; a non-contact relay that supplies the commercial AC power to an output side when a current flows to an input side according to the operation of the manual switch; a low-power supply unit that converts and supplies a voltage of the commercial AC power supplied by the non-contact relay; a microprocessor that receives power supplied by the low-power supply unit and controls the operation of the standby power cut-off device; a control signal generator that sends a control signal to the microprocessor when a current flows according to the operation of the manual switch; a capacitor that is charged and then discharged according to the operation of the manual switch; and a resistor that causes a charging voltage of the capacitor to be greater than an operating voltage of the control signal generator, wherein even though not in a forward direction when the manual switch operates, a current flows uninterruptedly in the control signal generator due to a discharge of the capacitor so as to prevent a malfunction due to the multiple operation control of the microprocessor is a best mode for carrying out the present disclosure.

In describing the present disclosure below, a detailed description of related known configurations or functions incorporated herein will be omitted when it is determined that the detailed description thereof may unnecessarily obscure the subject matter of the present disclosure. The terms described below are terms defined in consideration of the functions in the present disclosure, and may vary depending on the intention or custom of the user or operator. Therefore, the terms will be defined throughout the content of this specification.

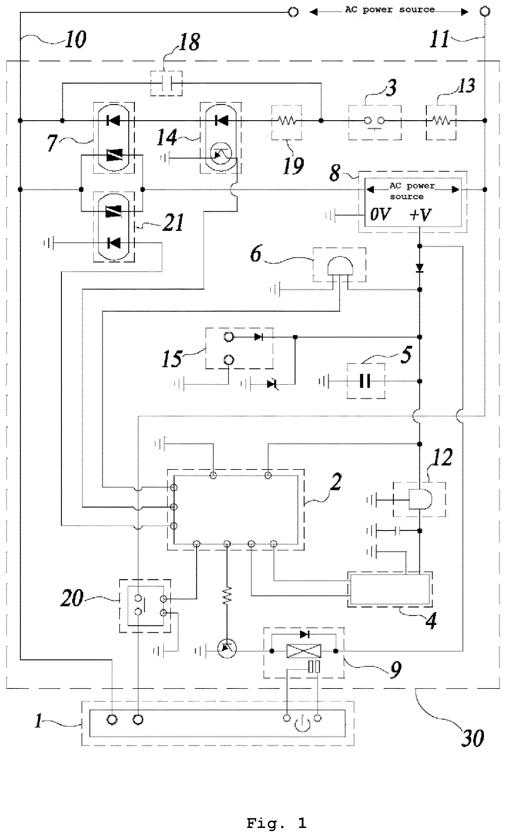

In FIG. 1, it is shown that a standby power cut-off device 30 of an electrical apparatus according to a first embodiment of the present disclosure is configured outside an electrical apparatus 1, but the device simply needs to be provided in the middle of a power line connected to an inside of the electric apparatus 1, and therefore, may also be configured inside the electrical apparatus 1. More preferably, it may be provided in a power cable and a power switch portion leading to a power supply device inside the electrical apparatus 1. Furthermore, the standby power cut-off device 30 itself may be an electrical apparatus such as an outlet, a multi-tap, a hub, a repeater, a plug, or an adapter.

In the first embodiment of FIG. 1, it is shown that one power line 11 of two power lines 10, 11 is disconnected by a main power switch 20 and the other power line 10 is connected thereto with no disconnection, but it will be apparent to those skilled in the art that the two power lines 10, 11 can be respectively disconnected by the main power switch 20. In addition, in this specification, the case of a single-phase power source will be described, but it will be apparent to those skilled in the art that a three-phase power source can also be used.

In this specification, the standby power cut-off device 30 may be abbreviated as a cut-off device 30.

The manual switch 3 of the present disclosure, which is a switch that supplies or cuts off power from a commercial AC power source, is a non-lock type switch in which contacts are connected only when operated. Preferably, the manual switch 3 is a tact switch. The operation of the manual switch 3 denotes that contacts of the switch are connected and turned on according to an action of pressing, pulling, or pushing.

A microprocessor 2 of the present disclosure may perform calculation, analysis, comparison, time control, detection, determination, high frequency generation, and the like to control an overall operation and function of the cut-off device 30. Additionally, the microprocessor 2 may also be a single semiconductor element that includes CPU functions such as a general-purpose microprocessor (MPU), a microcontroller (MCU), a RISC processor, and a DSP.

The cut-off device includes a control signal generator 14 that sends a control signal to the microprocessor 2 when a current flows according to the operation of the manual switch 3. The control signal generator 14 may be a photo coupler, a photo (MOS) FET, a reed switch, a relay, or the like. Here, the photo coupler collectively refers to a typical optical composite device in which light-emitting and light-receiving devices are optically coupled to each other to transmit electric signals between two electrically isolated devices, and includes a photo transistor, a photo triac, or the like.

A low-power supply unit 8 of the present disclosure converts commercial AC power supplied by a non-contact relay 7 into necessary DC power and supplies the converted DC power to the microprocessor 2 and other necessary places. The low-power supply unit 8 has a transformer type, a switching type or the like. For example, it may be a circuit consisting of a rectifier diode connected to both ends of any one of a plurality of capacitors connected in series to one another, or a circuit including a circuit to which a voltage regulator consisting of a capacitor, a resistor element, and a diode is connected in series, and a rectifier diode connected to both ends of the voltage regulator, or may be a switched-mode power supply (SMPS) or an AC-DC converter.

The non-contact relay 7 of the present disclosure, which is an on-off control device with a solid-state relay (SSR), is an alternating current output switch having separate input and output sides using one or more semiconductors. The non-contact relay 7 may be divided into a hybrid SSR, a transformer-coupled SSR, a photo-coupled SSR, and the like by the function of an input circuit, referring to a method of separating between an input and an output. The hybrid SSR, which is a non-contact relay coupled to a reed relay, is used as a switch by applying a control signal to a coil of the reed relay to activate a trigger circuit that operates a bidirectional thyristor (triac). The transformer-coupled SSR, which is a transformer-coupled non-contact relay, applies a control signal to a low-power small transformer, and operates a bidirectional thyristor using a secondary voltage generated by primary excitation. An optically coupled non-contact relay, for example, applies a control signal to a light-emitting diode or LED, and turns on the bidirectional thyristor, which is a photosensitive semiconductor, by means of radiation rays emitted from the source to conduct an alternating current. For example, there are a photo triac coupler, a bidirectional photo (MOS) FET, and the like. Here, the photo triac, which is a typical optical composite device in which light-emitting and light-receiving devices are optically coupled to each other to transmit electrical signals between two electrically isolated devices, may also be replaced by a phototransistor, a photodarlington, a photologic-IC, a photo coupler, a photo SCR, a photo FET or the like. Furthermore, a voltage may be applied to a light-emitting diode to turn on a phototransistor optically coupled thereto, and also operate a zero-cross circuit so as to turn on a triac in the vicinity of a zero voltage of an AC power supply voltage, thereby conducting an alternating current.

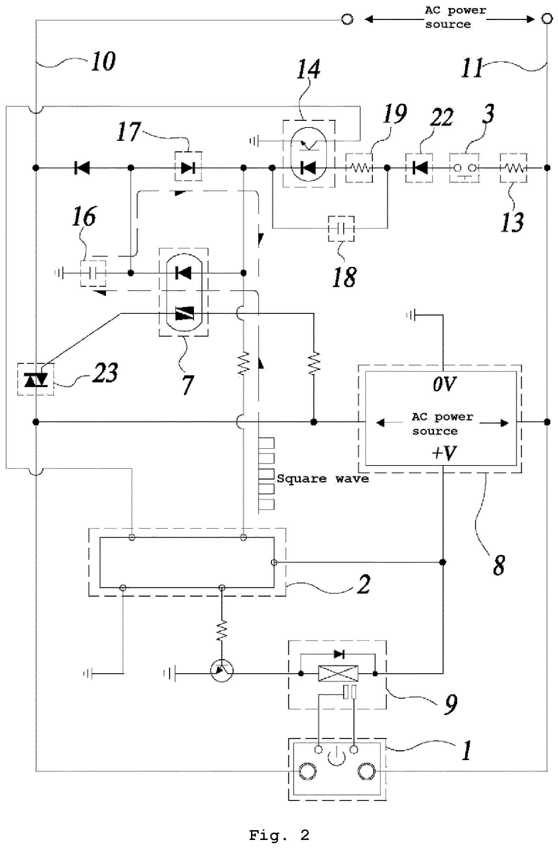

Meanwhile, referring to FIGS. 1 and 2, the cut-off device 30 further includes a current limiting resistor 13 and a diode 22, which are connected in series with the manual switch 3, to limit a current of the commercial AC power source. The current limiting resistor 13 and the diode 22 limit and divide the current of the commercial AC power source to perform a function of preventing strain on the manual switch 3, the control signal generator 14, and the non-contact relay 7.

Referring to FIG. 1, when the manual switch 3 is operated, a current is limited by the current limiting resistor 13, and the current flows in a forward direction by a diode of the control signal generator 14 and a diode of the non-contact relay 7. When in a reverse direction, no current flows. When the manual switch 3 is operated by the user for 0.5 to 1.5 seconds at a frequency of 60 Hz, the flowing and stopping of a current in the control signal generator 14 is repeated 30 to 90 times. Therefore, since the flowing and stopping in the control signal generator 14 is continuously repeated, the microprocessor 2 may detect that the control signal has been sent multiple times (two or more times) to perform multiple operation control. In order to prevent this, the control signal generator 14 must allow a current to flow in a reverse direction so that one control signal can be sent to the microprocessor 2 for each operation of the manual switch 3. Therefore, in order to allow a current to flow in the control signal generator 14 even in a reverse direction, there are provided a capacitor 18 that is charged and discharged according to the operation of the manual switch 3 and a resistor 19 that causes a charging voltage of the capacitor 18 to be greater than an operating voltage of the control signal generator 14. When the manual switch 3 is operated, even when not in a forward direction, a current flows uninterruptedly in the control signal generator 14 due to a discharge of the capacitor 18 to generate one control signal for each operation of the manual switch 3.

Meanwhile, when the non-contact relay 7 in FIG. 1 is a photo triac with a zero-cross circuit, it cannot be used because a current only flows in a forward direction at an input side thereof, and it can only be used when a current flows in a reverse direction as well.

Therefore, the standby power cut-off device 30 may be provided with a capacitor and a resistor as in the control signal generator 14 to allow a current to flow even when the non-contact relay 7 is not in a forward direction according to the operation of the manual switch 3, and may also be provided with a diode 22 in FIG. 2 if necessary. Of course, according to the operation of the manual switch 3, the capacitor 18 and the resistor 19 may be used to allow a current to flow in the non-contact relay 7 and the control signal generator 14 even when a current is not in a forward direction.

Therefore, the standby power cut-off device 30 may allow a current to flow uninterruptedly in the non-contact relay 7 due to a discharge of the capacitor 18 even though not in a forward direction when the manual switch 3 is operated, thereby allowing the commercial AC power to be uninterruptedly supplied to the low-power supply unit 8.

Referring to FIGS. 1 and 2, the non-contact relay 7 of the present disclosure is a switch that supplies or cuts off power from a commercial AC power source to the low-power supply unit 8 according to the operation of the manual switch 3, and also a switch that supplies or cuts off power from the commercial AC power source to the low-power supply unit 8 as the microprocessor 2 transmits high frequencies.

Meanwhile, referring to FIGS. 1 and 2, from among methods of actuating the non-contact relay 7 by the operation of the manual switch 3 to allow the microprocessor 2 to receive power, and allowing the microprocessor 2 to continuously receive power even when the manual switch 3 stops operation through the control of the microprocessor 2, two methods will be described.

First, as in the first embodiment of FIG. 1, the cutoff device 30 further includes a non-contact relay 21 controlled by the microprocessor 2 to allow the microprocessor 2 to continuously receive power even when the manual switch 3 stops operation after it has started operation. When the manual switch 3 is operated to allow a current to flow to an input side of the non-contact relay 7, a time period required to continuously receive power through supplying commercial AC power to the low-power supply unit 8 at an output side thereof, allowing the low-power supply unit 8 to supply power to the microprocessor 2, and allowing the microprocessor 2 to flow a current to the input side of the non-contact relay 21 to supply commercial AC power to the low-power supply unit 8 at the output side is so short that it can be said that it has been done at the same time, and the microprocessor 2 continuously receives power even when the manual switch 3 stops operation. Of course, at this time, a control signal from the control signal generator 14 is generated, and the microprocessor 2 performs operation control to turn on the electrical apparatus 1, for example. When the manual switch 3 is operated again, the microprocessor 2 does not transmit a current to the non-contact relay 21 due to a control signal from the control signal generator 14, and thus commercial AC power supplied to the low-power supply unit 8 is cut off to completely cut off standby power.

In the second embodiment of FIG. 2, instead of adding the non-contact relay 21 of the first embodiment to allow the microprocessor 2 to continuously receive power, there is disclosed a method of adding a low-capacity capacitor 16 and a discharge assistant 17 to allow the microprocessor 2 to directly control the non-contact relay 7.

The cut-off device 30 further includes a low-capacity capacitor through which predetermined high frequencies generated by the microprocessor passes through the input side of the non-contact relay and flows to the ground so as to allow the microprocessor to continuously receive power even when the manual switch stops operation after it has started operation. In addition, the cut-off device 30 further includes a discharge assistant that opens a discharge path to allow the low-capacity capacitor to perform discharge.

Referring to FIG. 2, the microprocessor 2 generates predetermined high frequencies. Here, the waveform is preferably a square wave.

Meanwhile, the low-capacity capacitor 16 of the present disclosure refers to a low-capacity capacitor through which high frequencies pass but commercial AC power cannot pass.

In addition, the discharge assistant 17 of the present disclosure performs a function of opening a path of current to facilitate discharge since the path of current is blocked by a diode of the non-contact relay 7 when high frequencies charge and discharge the low-capacity capacitor 16. The discharge assistant 17, which is a diode, may be a resistor instead of the diode. Here, a Schottky diode is preferably used for the diode.

In the second embodiment of FIG. 2, the standby power cut-off device 30 allows predetermined high frequencies generated by the microprocessor 2 to pass through an input side of the non-contact relay 7 and flow to the ground through the low-capacity capacitor 16 by the discharge assistant 17 so as to supply commercial AC power to the low-power supply unit 8 at an output side of the non-contact relay 7 to allow the microprocessor 2 to continuously receive power.

The reason why the microprocessor 2 generates and transmits predetermined high frequencies to the ground through the low-capacity capacitor 16 through which commercial AC power cannot pass is to avoid electrical collision between an operating voltage of the microprocessor 2 and a voltage of the commercial AC power source when the microprocessor 2 controls the non-contact relay 7.

With reference to FIG. 2, an operation due to the flow of a current will be described in detail as follows.

When the manual switch 3 is operating, when the commercial AC power line 11 is positive, a current flows through the resistor 13, the diode 22, a diode of the control signal generator 14, a diode of the non-contact relay 7, and the commercial AC power line 10, and the control signal generator 14 operates, and the low-power supply unit 8 operates by the non-contact relay 7.

In addition, according to the operation of the low-power supply unit 8 by the microprocessor 2, high-frequency square waves (e.g., several tens of kHz) produced by the microprocessor 2 flow to the ground through the resistor, the diode of the non-contact relay 7, and the low-capacity capacitor 16. At this time, the discharge assistant 17 assists square waves in charging and discharging the low-capacity capacitor 16 and flowing to the ground, and the low-power supply unit 8 is operated by the non-contact relay 7. Therefore, even when the manual switch 3 operates once and then stops operation, the microprocessor 2 may continuously receive power from the low-power supply unit 8 through the control of the microprocessor 2. Furthermore, when a triac 23 is provided at a rear end of the non-contact relay 7, a large current may flow even without using the main power switch 20. Additionally, each time the manual switch 3 is operated, a control signal from the control signal generator 14 is generated once.

Meanwhile, referring to FIG. 1, the cutoff device 30 further includes a main power switch 20 for the microprocessor 2 to supply or cut off power from a commercial AC power source to the electrical apparatus 1. The main power switch 20 is a non-contact relay 7 controlled by a microprocessor 2 or may be a relay. Alternatively, the main power switch 20 may be coupled to one of a triac, an FET, an IGBT, and a relay at a rear end of the non-contact relay 7 with respect to the non-contact relay 7 so as to allow a large current to flow. Here, the FET is a field effect transistor, the IGBT is an Insulated gate bipolar transistor, and the relay herein includes a latching relay as well as a general-purpose relay.

In addition, the cut-off device 30 further includes an on/off control switch 9 for the microprocessor 2 to turn on/off the electrical apparatus 1. The on/off control switch 9 connected to a switch portion of the electrical apparatus 1, which is a control switch for performing an on/off operation, that is, turning on/off, after the commercial AC power source is connected to the electrical apparatus 1, may be a relay, a reed switch, or a transistor.

Meanwhile, the cut-off device 30 further includes a wireless receiving device 4 that receives a wireless signal transmitted from an outside of the standby power cut-off device 30 to transmit the signal to the microprocessor 2. The wireless receiving device 4 may be a variety of sensors and may have a wireless transmission function if necessary.

Meanwhile, the wireless signal may include a wireless LAN signal transmitted through a wireless Internet network, an infrared signal transmitted from a remote control, various types of communication methods according to the purpose, including shortrange wireless communication technologies such as Bluetooth, NFC, and Zigbee, and wide-area wireless communication technologies such as LoRa, 3G, LTE, 4G, and 5G, but is not limited thereto. In the present disclosure, the wireless signal refers to any wireless signal that transmits information to a remote location through radio waves, light, sound waves, and the like.

In addition, the cut-off device 30 further includes a power storage unit 5 that is charged by receiving power from the low-power supply unit 8 and supplies power to the wireless receiving device 4 and the microprocessor 2. The power storage unit 5 supplies power to the microprocessor 2 while the commercial AC power source is cut off or detects a wireless signal to supply power for operating the cut-off device 30, which may be a battery or super capacitor, or a hybrid battery ultracapacitor (with graphene), a high-capacity capacitor, and the like.

The cut-off device 30 may further include a voltage regulator 12 for supplying a safe voltage to the wireless receiving device 4 at a rear end of the power storage unit 5.

In order to save the power supplied by the power storage unit 5, the cut-off device 30 is controlled such that the wireless receiving device 4 is not activated all the time, but is activated at a predetermined time period. In this case, even when the wireless receiving device 4 senses at a predetermined time period (intermittently), no malfunction occurs when the transmitting device (e.g., smartphone) transmits a continuous signal once for control.

Meanwhile, in order to save the power supplied by the power storage unit 5, the microprocessor 2 may preferably enter a sleep mode from a standby mode after operation.

In addition, the cut-off device 30 further includes a voltage detector 6 that detects a charging voltage value of the power storage unit 5. The power storage unit 5 is controlled to be charged according to the charging voltage value of the power storage unit 5 detected through the voltage detector 6. Furthermore, the power storage unit 5 may also be charged for a determined period of time.

Additionally, when the power storage unit 5 is a super capacitor, the rated voltage should be higher than a supply voltage of the low-power supply unit 8. If the rated voltage of the super capacitor is less than the supply voltage of the low-power supply unit 8, then the cut-off device 30 is at a disadvantage because a time period capable of cutting off the commercial AC power source is shortened. Meanwhile, a time constant refers to a time period required to charge the super capacitor to 62.8% of the power source voltage. In general, when five times the time constant passes, the super capacitor is charged to about 99% of its normal state. On the other hand, when a time period it takes for a super capacitor to reach a determined reference lower charge value from a determined reference upper charge value is measured by an experiment or the like, the super capacitor may be charged for a determined time period according to the time period from the reference upper charge value to the reference lower charge value even without using the voltage detector 6. Accordingly, the power storage unit 5 of the cut-off device 30 may be controlled to be charged for a predetermined period of time as a set period of time elapses.

Meanwhile, the cut-off device 30 further includes an energy harvesting power unit 15 that charges the power storage unit 5. The energy harvesting power unit 15 includes, for example, a solar cell and a Zener diode to charge the power storage unit 5 with energy harvested power.

The energy harvesting power unit 15 may be power by means of sunlight, solar heat, electric light, wind power (windmill), water power (water wheel), and the like, and may also be small power using a body movement or body temperature, and spring generation power.

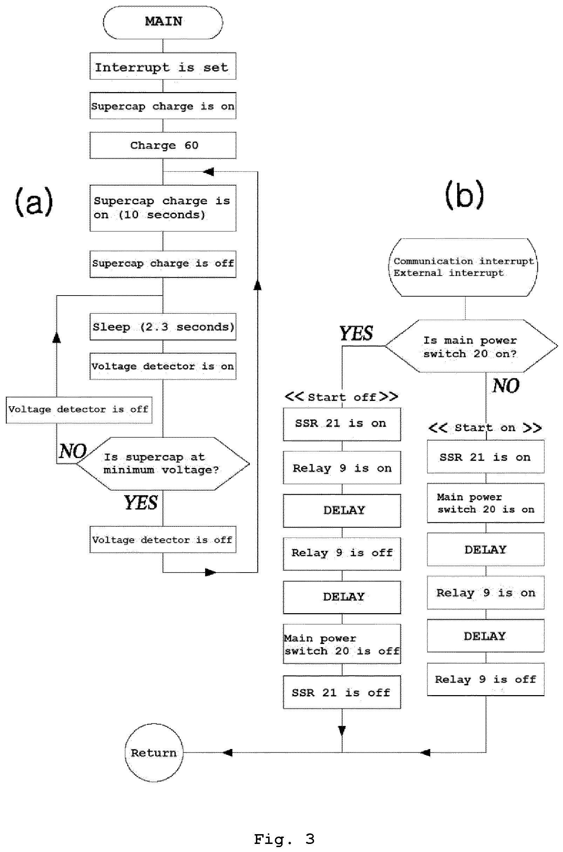

Referring to (a) of FIG. 3, it is shown an example in which the power storage unit 5 in the circuit diagram of FIG. 1 is a super capacitor. The super capacitor 5 is abbreviated as a supercap. According to (a) of FIG. 3, an effective interrupt is set to initially charge the super capacitor 5 sufficiently for 5 times the time constant (e.g., 60 seconds) and charge the super capacitor 5 again for a predetermined 10 seconds, and then the microprocessor 2 repeats a process of entering a sleep mode when in a standby mode, waking up after 2.3 seconds to actuate the voltage detector 6 so as to detect whether the super capacitor is at a set minimum voltage, turning off the voltage detector 6 when not at the minimum voltage to enter the sleep mode again, and activating the voltage detector 6 again after 2.3 seconds to detect whether a charging voltage value of the super capacitor 5 is the set minimum voltage, and turns off the voltage detector 6 when detected by the voltage detector 6 that the charging voltage of the super capacitor 5 is below the minimum voltage, and charges for a set time period of 10 seconds, and then the microprocessor 2 returns to the sleep mode again.

A communication interrupt and an external interrupt in (b) of FIG. 3 will be described with reference to the circuit diagram of FIG. 1. In response to a signal from the wireless receiving device 4 or a control signal from the control signal generator 14 through the manual switch 3, the microprocessor 2 determines the on/off state of the electric apparatus 1 depending on whether the main power switch 20 is operating. When the main power switch 20 is turned off and the electrical apparatus 1 is determined to be in an off state, an on operation is carried out. First, the non-contact relay 21 is activated to charge the super capacitor 5. Next, the main power switch 20 is operated on to supply commercial AC power to the electrical apparatus 1, and then delay the time until an inrush current generated during power-on becomes a normal current, and turn on the electrical apparatus 1 by means of the relay 9, which is an on/off control switch connected to a power supply unit of the electrical apparatus 1, and then turn off the relay 9, and the process returns. Furthermore, in response to a signal from the wireless receiving device 4 or a control signal from the control signal generator 14 through the manual switch 3, the microprocessor 2 recognizes the on/off state of the electric apparatus 1 by means of the on/off state of the main power switch 20. When the main power switch 20 is turned on and the electrical apparatus 1 is determined to be in an on state, an off operation is carried out. First, the non-contact relay 21 is activated to charge the super capacitor 5. Next, the electrical apparatus 1 is turned off by means of the relay 9 connected to the power supply unit of the electrical apparatus 1, and after a while, the main power switch 20 is turned off, and the operation of the non-contact relay 21 is turned off in sequence, and the process returns.

Although specific embodiments of the present disclosure have been described above, various modifications or changes may be made thereto without departing from the scope of the present disclosure. Therefore, the scope of the present disclosure is not limited to the above-described embodiments, and should be defined by the claims and equivalents thereto.

When turning on or off an electrical apparatus by means of a manual switch, a current may flow uninterruptedly in the control signal generator to prevent a malfunction due to the multiple operation control of the microprocessor and completely cut off unnecessary standby power when the electrical apparatus is turned off, and thus the present disclosure may be widely applicable to all electrical apparatuses, especially IoT devices.

## Claims

1. A standby power cut-off device provided on a power line connected from a commercial alternating current (AC) power source to an inside of an electrical apparatus, the device comprising:
a manual switch that supplies or cuts off power from the commercial AC power source;
a non-contact relay that supplies the commercial AC power to an output side when a current flows to an input side according to the operation of the manual switch;
a low-power supply unit that converts and supplies a voltage of the commercial AC power supplied by the non-contact relay;
a microprocessor that receives power supplied by the low-power supply unit and controls the operation of the standby power cut-off device;
a control signal generator that sends a control signal to the microprocessor when a current flows according to the operation of the manual switch;
a capacitor that is charged and then discharged according to the operation of the manual switch; and
a resistor that causes a charging voltage of the capacitor to be greater than an operating voltage of the control signal generator,
wherein even though not in a forward direction when the manual switch operates, a current flows uninterruptedly in the control signal generator due to a discharge of the capacitor so as to prevent a malfunction due to the multiple operation control of the microprocessor.

2. The device of claim 1, further comprising:
a current limiting resistor and a diode, which are connected in series with the manual switch, to limit a current of the commercial AC power source.

3. The device of claim 1, further comprising:
a non-contact relay controlled by the microprocessor to allow the microprocessor to continuously receive power even when the manual switch stops operation after it has started operation.

4. The device of claim 1, further comprising:
a low-capacity capacitor through which predetermined high frequencies generated by the microprocessor pass through the input side of the non-contact relay and flow to the ground so as to allow the microprocessor to continuously receive power even when the manual switch stops operation after it has started operation.

5. The device of claim 1, further comprising:
a main power switch that allows the microprocessor to supply or cut off the commercial AC power to the electrical apparatus.

6. The device of claim 1, further comprising:
an on/off control switch that allows the microprocessor to turn on/off the electrical apparatus.

7. The device of claim 1, further comprising:
a wireless receiving device that receives a wireless signal transmitted from an outside of the standby power cut-off device to transmit the received signal to the microprocessor.

8. The device of claim 7, further comprising:
a power storage unit that is charged by receiving power from the low-power supply unit to supply power to the wireless receiving device and the microprocessor.

9. The device of claim 8, further comprising:
a voltage detector that detects a charging voltage value of the power storage unit.

10. The device of claim 8, further comprising:
an energy harvesting power unit that charges the power storage unit.
